# EUROPEAN PATENT SPECIFICATION

(11) **EP 0 579 573 B1**
(45) Date of publication and mention of the grant of the patent: **27.08.1997**
(21) Application number: 93610042.9
(22) Date of filing: 08.07.1993
(51) Int. Cl.: A01D 57/00, A01D 43/10, A01D 34/66

(54) **A lift-suspended mower**
An einer Kupplungsvorrichtung angehängte Mähmaschine
Faucheuse montée sur un dispositif d'attelage

(30) Priority: 16.07.1992 DK 37/92 U
(43) Date of publication of application: 19.01.1994
(73) Proprietor: JF-FABRIKEN - J. FREUDENDAHL A/S, DK-6400 Sonderborg (DK)
(72) Inventor: Freudendahl, Jorn, DK-6400 Sonderborg (DK); Rasmussen, Laurits, DK-6400 Sonderborg (DK)
(74) Representative: Raffnsöe, Knud Rosenstand

(56) References cited:
- EP-A- 0 155 063
- EP-A- 0 168 665
- EP-A- 0 332 552
- EP-A- 0 521 812
- EP-A- 0 524 130
- EP-A- 0 524 131
- EP-A- 0 558 437
- FR-A- 2 535 154
- GB-A- 2 119 618
- US-A- 2 974 469
- US-A- 3 092 946
- US-A- 4 166 353

## Description

The present invention relates to a mower of the type which on one side is pivotally connected with a frame structure for direct mounting on the rear carrying arms of a tractor, so that by means of said pivotal connection it can be turned from a transport position to a working position outside the track of the tractor, in which it is substantially transverse to the driving direction.

For towed mowers with conditioning cylinders, from which the crop is ejected at a certain speed, it is known per se to adjust the mower so that it assumes an oblique position as compared with the normal working position substantially parallel with the driving direction of the tractor in order to windrow the ejected swath in twos. In a known mower (EP-A-0 332 552), such a position in which the side of the mower which is remotest from the tractor is shifted to the rear seen in the driving direction, can be established by hydraulic steering of the bull wheels of the mower.

At the same time, two lateral limiting plates projecting to the rear at the swath ejection opening of the mower are pivotal.

This known mower is used in a way that ensures that it is in the normal position at right angles to the driving direction during every second drive and in said oblique position during every second drive.

The present invention is based on recognition of the fact that for a lift-suspended mower which is suspended directly in the carrying arms of a tractor and does not have its own bull wheels it is possible to obtain a large angle variation range for the working position by oblique positioning of the mower in relation to the position at right angles to the driving direction, as the activating member normally designed as a hydraulic cylinder in some known mashines already serves to perform the pivotal movement between the transport position and the working position.

EP-A-0 524 131 which was published on January 20, 1993 and thus is a document under Article 54(3), EPC in relation to the present application relates to a lift-suspended mower which is swingable between a transport position parallel to the driving direction and a transverse working position whereby it during operation is swung between two oblique positions respectively in front of and to the rear of the exact transverse position.

EP-A-0 558 437 which was published on September 1, 1993 and also falls under Article 54(3), EPC relates to a combination of mowers of which a rear one during operation is kept in a fixed rearward oblique position. Thus this rear mower can be turned between a rear oblique working position in which it can place a swath adjacent a swath already placed on the ground by a front mower within the track of the tractor and a transport position parallel to the driving direction.

Mowers of the art which is mentioned in the opening paragraph are known from GB-A-2 119 618 and EP-A-0 155 063. The mower disclosed in GB-A-2 119 618 has a transport position in which it is parallel to the driving direction, whereas the mower disclosed in EP-A-0 155 063 apears to be swingable about a horizontal axis parallel to the driving direction to an upright i.e. substantially vertical transport position.

Due to the existence of the above mentioned EP-A-0 524 131 the scope of protection sought is defined in the present patent by two overlapping independent claims, namely claims 1 and 4 the former of which is based on EP-A-0 155 063 while the latter is based on either of GB-A-2 119 618 and EP-A-0 155 063.

The mower according to the invention is used in a way that ensures that after each drive a switch is made between a rearward oblique position and the position at right angles or a forward oblique position.

By working with two oblique positions the advantage over known windrowing mowers is that by adjusting the swath width by means of lateral limiting plates projecting at the rear end, only the limiting plate remotest from the tractor needs to be pivotal whereas the other may be stationary.

As such movable lateral limiting plates, of which one is at a distance from the tractor determined by the working width of the mower, due to their weight may be a disadvantage in lift-suspended mowers, an alternative possibility is to adjust the position of the windrows of ejected swath on the ground by adjusting the throwing range.

This may be achieved according to a preferred embodiment in a mower equipped with a crop-conditioning cylinder by providing means for adjustment of the rate of rotation of the conditioning cylinder or by means of a control plate arranged pivotally on a horizontal axis behind the conditioning cylinder for limiting the ejection of the swath from above.

The invention is further explained in the following with reference to the schematical drawing, in which
Fig. 1 shows the variation of the working position of a mower during subsequent runs through the field,
Fig. 2 an embodiment of means for adjustment of windrowing the ejected swath with the mower in an oblique working position,
Fig. 3 another known mower modified according to the invention and shown shifted obliquely to the rear, and
Fig. 4 the suspension of the mower shown in Fig. 3 seen in the direction of the arrows IV-IV.

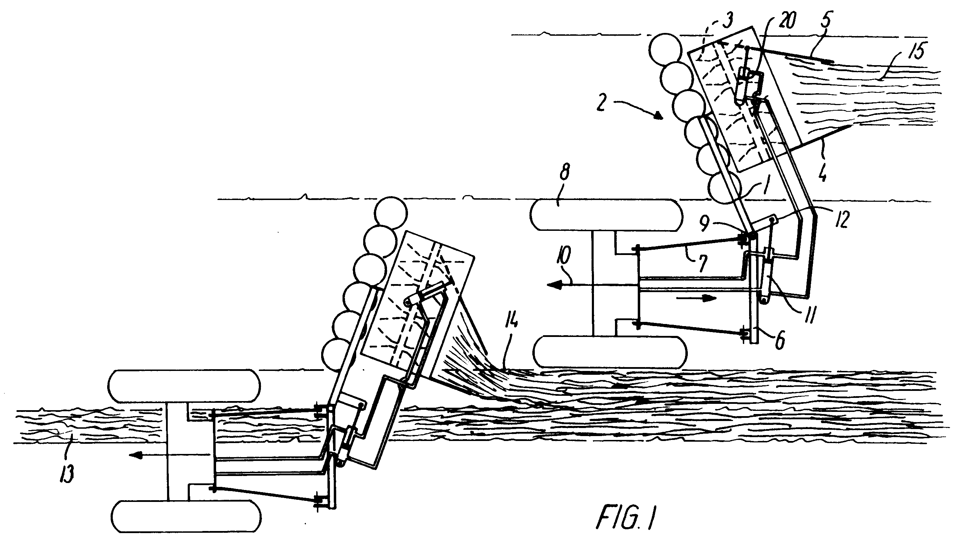

The mower shown in Fig. 1 comprises a supporting structure 1, in which disc mowing gear 2 are suspended and to which a conditioning unit with a crimper rotor 3 shown in dotted line is connected. At the swath ejection opening the swath width is limited by means of sideways limiting plates 4 and 5, of which one 4 is stationary, whilst the other is pivotal on a vertical axis.

The supporting structure 1 is pivotally connected with a frame structure 6, mounted on the carrying arms 7 of a tractor, of which only the rear bull wheels 8 are shown. The pivotal connection serves to enable the mower to pivot on the vertical pivot axis 9 so as to move between a not-shown transport position in which it is substantially parallel with the driving direction 10 of the tractor and a working position. The pivotal movement is performed by a double acting hydraulic cylinder 11 arranged between the frame structure 6 and a member 12 connected with the supporting structure 1 of the mower.

The hydraulic cylinder is designed with such a stroke that the working position can be varied on both sides of a position which is substantially at right angles to the driving direction between oblique positions in which the side of the mower remotest from the tractor is in front of and to the rear, respectively, of the pivot axis 9 seen in the driving direction. The angle variation range may be approx.30° on each side of the position at right angles to the driving direction.

After having driven through the field in one of the two oblique positions for windrowing, the mower assumes the other oblique position during the subsequent drive, the limiting plate 5 at the same time being adjusted so as to lay the swath 14 in close abutment on the swath 13. The limiting plate 5 is made to pivot by means of a double acting hydraulic cylinder 20, which is in operative connection with the hydraulic cylinder 11, so that the limiting plate is turned from one to the other of two fixed oblique positions at pivoting of the mower. Adjustment of the swath limiting plate can thus be done from the tractor driver's cab by operating a single actuator.

As a result of the operative connection between the two working cylinders 11 and 12 the two oblique positions of the mower are determined in this embodiment by not-shown fixed stops for the pivotal movement.

During the subsequent run, the tractor drives along a track corresponding to the harvested working width of the mower during the preceding run and the adjustment of the limiting plate 5 is changed so that swath 15 is laid so that during the next run - as swath 13 - it lies immediately at the inner side of the bull wheel 8 of the tractor which is closest to the mower.

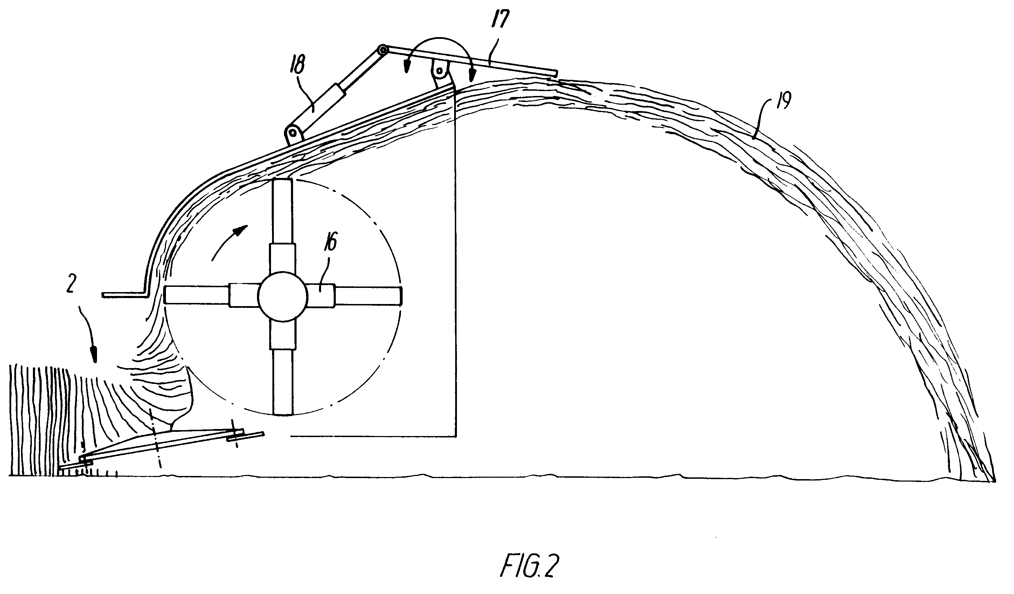

In the side view of Fig. 2 is shown an embodiment of the windrowing means, whereby the sideways limiting plates, which project relatively far to the rear and which due to their weight can be an impediment in a lift-suspended mower, can be dispensed with. The windrows are instead adjusted by adjustment of the throwing range for the swath ejected from the crimper rotor 16. In the Figure this adjustment is made by arrangement behind the crimper rotor 16 of a control plate 17, pivotal on a vertical axis and adjusted by means of a hydraulic cylinder 18 for limiting the throwing range from the top. In this embodiment it is not necessary to have fixed stops for determining the two oblique positions of the mower.

As another possibility, the throwing range can be adjusted by an adjustment, possibly infinitely variable, of the rate of rotation of the crimper rotor, which may be made hydraulically or by a variator drive of the rotor.

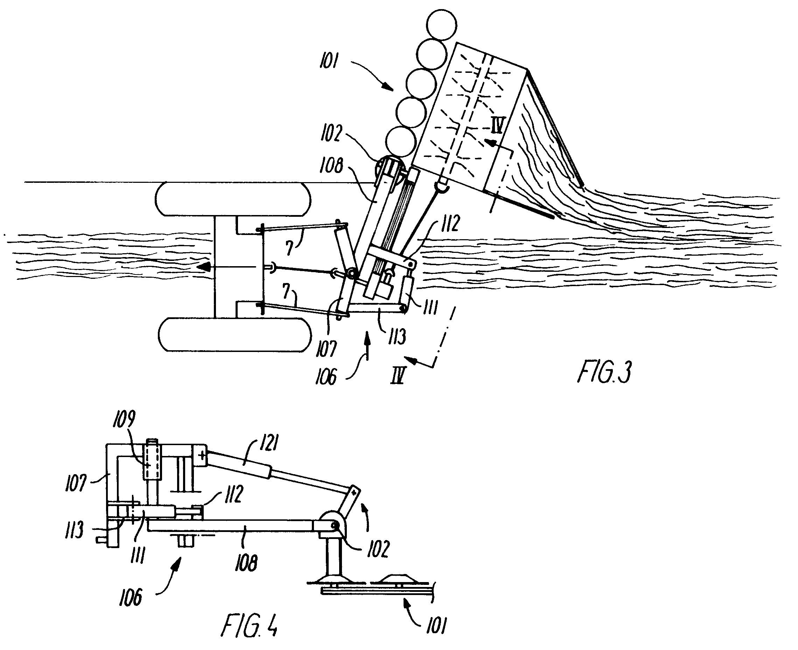

In Figs. 3 and 4 the invention is shown in use with another known mower 101, which in relation to a frame structure or a suspension 106 is pivotally suspended around a horizontal axis 102, whereby the mower 101 may be shifted from a horizontal working position to a substantially vertical transport position, for instance by means of the power cylinder 121 shown in Fig. 4. The suspension 106 comprises a first part 107 to be mounted on the carrying arms 7 of a tractor and second part 108, carrying the mower 101. The two parts 107 and 108 are connected by a hinge 109 with a vertical axis, around which the second part 108 and consequently the mower can shift between a position perpendicular to the driving direction of the tractor and forward and/or rearward positions. The two parts 107 and 108 are for instance mutually shifted by a hydraulic cylinder 111, acting between a member 112 on the second part 108 and second member 113 on the first part 107.

It should be noted that the embodiment shown in fig. 1 falls outside the scope of protection of the present patent because the mower 2 during the run illustrated to the right in the figure is shifted or turned to an oblique position forward of the transverse position and in the transport position the mower will be substantially parallel to the driving direction and not substantially vertical.

## Claims

1. A mower of the type which on one side is pivotally connected with a frame structure (6; 107, 108) for direct mounting on the rear carrying arms (7) of a tractor, so that by means of said pivotal connection (9; 102) it can be turned from a substantially vertical transport position to a working position outside the track of the tractor, in which it is substantially transverse to the driving direction (10), **characterized** in that an activating member (11;111) is arranged between said frame structure (6) and an element (12) connected to the supporting structure of the mower and is designed so as to be capable of varying the working position of the mower in relation to a position at right angles to the driving direction (10) of the tractor by turning the mower in a substantially horizontal plane to two oblique positions, in which the side of the mower remotest from the frame structure (6) is forward of and to the rear of the frame structure (6) seen in the driving direction (10), and that the mower is provided with means (5, 17) for adjustment of the position of the windrows of ejected swath on the ground.

2. A mower as claimed in claim 1, **characterized** in that the angle variation range for said oblique positions of the mower is approx. +/- 30° as compared to said position at right angles to the driving direction (10).

3. A mower of the type which on one side is pivotally connected with a frame structure (6; 107, 108) for direct mounting on the rear carrying arms (7) of a tractor, so that by means of said pivotal connection (9; 102) it can be turned from a transport position to a working position outside the track of the tractor, in which it is substantially transverse to the driving direction (10), **characterized** in that an activating member (11;111) is arranged between said frame structure (6) and an element (12) connected to the supporting structure of the mower and is designed so as to be capable of varying the working position of the mower in relation to a position at right angles to the driving direction (10) of the tractor by turning the mower in a substantially horizontal plane from a position at right angles to the driving direction only to an oblique position, in which the side of the mower remotest from the frame structure (6) is to the rear of the frame structure (6) seen in the driving direction (10), and that the mower is provided with means (5, 17) for adjustment of the position of the windrows of ejected swath on the ground.

4. A mower as claimed in claim 3, **characterized** in that the angle variation range for said oblique position of the mower is approx. 30° as compared to said position at right angles to the driving direction (10).

5. A mower as claimed in any of claims 1-4, **characterized** in that said adjustment means for the ejected swath (13, 14, 15) comprises lateral limiting plates (4, 5) at the crop ejection opening of the mower, of which one (5) is pivotal on a vertical axis for adjustment of the windrowing width.

6. A mower as claimed in claim 5, **characterized** in that said activating member comprises a first hydraulic cylinder (11) arranged between the frame structure (6) and the supporting structure (1) of the mower and that the pivotal movement of said one lateral limiting plate (5) is brought about by means of a second, double-acting hydraulic cylinder mounted on the supporting structure (1) of the mower, in operative connection with the first hydraulic cylinder (11) for turning the side plate (5) between two positions corresponding to each of said working positions of the mower.

7. A mower as claimed in any of claims 1 to 6 with crop conditioning cylinder, **characterized** in that said adjustment means (17) is designed for adjusting the throwing range for the swath ejected from the mower.

8. A mower as claimed in claim 7, **characterized** in that said adjustment means comprises means for adjusting the speed of rotation of the conditioning cylinder (16).

9. A mower as claimed in claim 8, **characterized** in that said adjustment means comprises a control plate (17) arranged behind the conditioning cylinder (16) and pivotal on a horizontal axis for limiting the swath ejection (19) from above.

## Patentansprüche

1. Mähmaschine der Art, die auf einer Seite mit einer Rahmenkonstruktion (6; 107, 108) zum direkten Montieren auf den hinteren Tragarmen (7) eines Traktors drehbar verbunden ist, sodass sie mittels dieser Drehverbindung (9; 102) von einer im wesentlichen senkrechten Transportstellung in eine Arbeitsstellnung ausserhalb der Traktorspur, in der sich die Mähmaschine im wesentlichen quer zur Fahrrichtung (10) befindet, geschwenkt werden kann, dadurch **gekennzeichnet**, dass zwischen der Rahmenkonstruktion (6) und einem mit der Tragkonstruktion der Mähmaschine verbundenem Element (12) ein Aktivierungselement (11; 111) angeordnet und derart ausgebildet ist, dass es die Arbeitsstellung der Mähmaschine im Verhältnis zu einer zur Fahrrichtung (10) des Traktors rechtwinkeligen Stellung variieren kann, indem man die Mähmaschine in einer im wesentlichen waagrechten Ebene in zwei schräge Stellungen schwenkt, in welchen die von der Rahmenkonstruktion (6) am entferntesten liegende Seite der Mähmaschine in der Fahrrichtung (10) gesehen vor bzw. hinter der Rahmenkonstruktion (6) liegt, und dass die Mähmaschine mit einem Mittel (5, 17) zum Einstellen der Lage der Reihen ausgeworfener Schwaden auf der Erde versehen ist.

2. Mähmaschine nach Anspruch 1, dadurch **gekennzeichnet**, dass der Bereich der Winkelvariation für erwähnte Schrägstellungen der Mähmaschine im Vergleich zu der zur Fahrrichtung (10) rechtwinkeligen Stellung etwa +/-30° ist.

3. Mähmaschine der Art, die auf einer Seite mit einer Rahmenkonstruktion (6; 107, 108) zum direkten Montieren auf den hinteren Tragarmen (7) eines Traktors drehbar verbunden ist, sodass sie mittels dieser Drehverbindung (9; 102) von einer Transportstellung in eine Arbeitssteliung ausserhalb der Traktorspur geschwenkt werden kann, in welcher Stellung sich die Maschine im wesentlichen quer zur Fahrrichtung (10) befindet, dadurch **gekennzeichnet**, dass zwischen der Rahmenkonstruktion (6) und einem mit der Tragkonstruktion der Mähmaschine verbundenem Element (12) ein Aktivierungselement (11; 111) angeordnet und derart ausgebildet ist, dass es die Arbeitsstellung der Mähmaschine im Verhältnis zu einer zur Fahrrichtung (10) des Traktors rechtwinkeligen Stellung variieren kann, indem man die Mähmaschine in einer im wesentlichen waagrechten Ebene von einer zur Fahrrichtung rechtwinkeligen Stellung lediglich in eine schräge Stellung schwenkt, in welcher die von der Rahmenkonstruktion (6) am entferntesten liegende Seite der Mähmaschine in der Fahrrichtung (10) gesehen hinter der Rahmenkonstruktion liegt, und dass die Mähmaschine mit einem Mittel (5, 17) zum Einstellen der Lage der Reihen ausgeworfener Schwaden auf der Erde versehen ist.

4. Mähmaschine nach Anspruch 3, dadurch **gekennzeichnet**, dass der Bereich der Winkelvariation für erwähnte Schrägstellung der Mähmaschine im Vergleich zu der zur Fahrrichtung (10) rechtwinkeligen Stellung etwa 30° ist.

5. Mähmaschine nach einem der Ansprüche 1-4, dadurch **gekennzeichnet**, dass erwähntes Einstellmittel für die ausgeworfenen Schwaden (13, 14, 15) bei der Auswurföffnung der Mähmaschine seitliche Begrenzungsplatten (4, 5) umfasst, wovon die eine (5) zum Regulieren der Schwadenbreite um eine senkrechte Achse schwenkbar ist.

6. Mähmaschine nach Anspruch 5, dadurch **gekennzeichnet**, dass das Aktivierungselement einen zwischen der Rahmenkonstruktion (6) und der Tragkonstruktion (1) der Mähmaschine angeordneten ersten Hydraulikzylinder (11) umfasst, und dass die schwenkbare Bewegung der einen seitlichen Begrenzungsplatte (5) mittels eines zweiten, auf der Tragkonstruktion (1) der Mähmaschine montierten doppelt wirkenden Hydraulickzylinders zustandekommt, der mit dem ersten Hydraulikzylinder (11) zum Schwenken der Seitenplatte (5) zwischen zwei Stellungen entsprechend den zwei Arbeitsstellungen der Mähmaschine in betriebsklarer Verbindung steht.

7. Mähmaschine nach einem der Ansprüche 1-6 mit einem Erntegut-Konditionierungszylinder, dadurch **gekennzeichnet**, dass das erwähnte Einstellmittel (17) zum Einstellen der Wurfweite der von der Mähmaschine ausgeworfenen Schwade vorgesehen ist.

8. Mähmaschine nach Anspruch 7, dadurch **gekennzeichnet**, dass das Einstellmittel Mittel zum Justieren der Rotationsgeschwindigkeit des Konditionierungszylinders (16) umfasst.

9. Mähmaschine nach Anspruch 8, dadurch **gekennzeichnet**, dass das Einsteilmittel eine hinter dem Konditionierungszylinder (16) angeordnete und um eine waagrechte Achse drehbaree Steuerplatte (17) zum Begrenzen des Schwadenauswerfens (19) von oben umfasst.

## Revendications

1. Faucheuse du type qui d'un coté est relié à pivotement avec une structure de cadre (6; 107, 108) pour montage direct sur les bras porteurs arrière (7) d'un tracteur afin de pouvoir, à l'aide de ladite liaison à pivotement (9; 102), tourner depuis une position sensiblement verticale de transport jusqu'à une position de travail hors de la voie du tracteur, position dans laquelle elle est sensiblement transversale par rapport au sens de conduite (10), **caractérisée** par le fait qu'un organe de commande (11; 111) est disposé entre ladite structure de cadre (6) et une pièce (12) reliée à la structure porteuse de la faucheuse, et conçu pour pouvoir faire varier la position de travail de la faucheuse par rapport à une position à angle droit avec le sens de conduite (10) du tracteur, par rotation de la faucheuse, dans un plan essentiellement horizontal, jusqu'à deux positions obliques dans lesquelles le coté de la faucheuse le plus éloigné de la structure de cadre (6) se situe en avant et en arrière de la structure de cadre (6) considérée dans le sens de conduite (10), et par le fait que la faucheuse est pourvue de moyens (5, 17) de réglage de la position d'andains de récolte éjectée au sol.

2. Faucheuse selon la revendication 1, **caractérisée** en ce que la gamme de variation angulaire pour lesdites positions obliques de la faucheuse est d'environ +/- 30° par rapport à ladite position à angle droit sur le sens de conduite (10).

3. Faucheuse du type qui d'un coté est relié à pivotement avec une structure de cadre (6; 107, 108) pour montage direct sur les bras porteurs arrière (7) d'un tracteur afin de pouvoir, à l'aide de ladite liaison à pivotement (9; 102), tourner depuis une position de transport jusqu'à une position de travail hors de la voie du tracteur, position dans laquelle elle est sensiblement transversale par rapport au sens de conduite (10), **caractérisée** par le fait qu'un organe de commande (11; 111) est disposé entre ladite structure de cadre (6) et une pièce (12) reliée à la structure porteuse de la faucheuse, et conçu pour pouvoir faire varier la position de travail de la faucheuse par rapport à une position à angle droit avec le sens de conduite (10) du tracteur, par rotation de la faudheuse, dans un plan essentiellement horizontal, depuis une position à angle droit avec le sens de conduite jusqu'à seulement une position oblique dans laquelle le coté de la faucheuse le plus éloigné de la structure de cadre (6) se situe en arrière de la structure de cadre (6) considérée dans le sens de conduite (10), et par le fait que la faucheuse est pourvue de moyens (5, 17) de réglage de la position d'andains de récolte éjectée au sol.

4. Faucheuse selon la revendication 3, **caractérisée** en ce que la gamme de variation angulaire pour ladite position oblique de la faucheuse est d'environ 30° par rapport à ladite position à angle droit sur le sens de conduite (10).

5. Faucheuse selon l'une quelconque des revendications 1 à 4, **caractérisée** en ce que lesdits moyens de réglage d'andains éjectés (13, 14, 15) comprennent des plaques latérales de limitation (4, 5) à l'ouverture d'éjection de récolte de la faucheuse, l'une de ces plaques (5) étant pivotable sur un axe vertical pour réglage de la largeur d'andainage.

6. Faucheuse selon la revendication 5, **caractérisée** en ce que ledit organe de commande comprend un premier vérin hydraulique (11) disposé entre la structure de cadre (6) et la structure porteuse (1) de la faucheuse et en ce que le mouvement de pivotement de ladite une plaque latérale de limitation (5) est produit à l'aide d'un second vérin hydraulique à double action monté sur la structure porteuse (1) de la faucheuse et en liaison opératoire avec le premier vérin hydraulique (11) pour faire pivoter ladite plaque latérale (5) entre deux positions correspondant à chacune desdites positions de travail de la faucheuse.

7. Faucheuse selon l'une quelconque des revendications 1 à 6, avec cylindre de conditionnement, **cara ctérisée** en ce que lesdits moyens de réglage (17) sont conçus pour régler la portée d'éjection de la récolte éjectée de la faucheuse.

8. Faucheuse selon la revendication 7, **caractérisée** en ce que lesdits moyens de réglage comprennent des moyens de réglage de la vitesse de rotation du cylindre de conditionnement (16).

9. Faucheuse selon la revendication 8, **caractérisée** en ce que lesdits moyens de réglage comprennent une plaque de contrôle (17) disposée au dessus du cylindre de conditionnement (16) et pivotable autour d'un axe horizontal, pour limiter l'éjection de récolte (19) par le haut.
